# EUROPÄISCHE PATENTSCHRIFT

(11) **EP 1 418 460 B1**
(45) Veröffentlichungstag und Bekanntmachung des Hinweises auf die Patenterteilung: **05.04.2006**
(21) Anmeldenummer: 03025619.2
(22) Anmeldetag: 06.11.2003
(51) Int. Cl.: G02F 1/03, H03K 3/57, H01S 3/107

(54) **Ansteuerschaltung für Pockelszelle und Lasersystem mit einer solchen Ansteuerschaltung und einer Pockelszelle**
Driver citcuit for Pockels cell and laser system with such a driver circuit and a pockels cell
Circuit de commande pour une cellule de Pockels et système comprenant un laser utilisant un tel circuit et cellule de Pockels

(30) Priorität: 07.11.2002 DE 10251888
(43) Veröffentlichungstag der Anmeldung: 12.05.2004
(73) Patentinhaber: Bergmann Messgeräte Entwicklung KG, 82418 Murnau (DE); Lumera Laser GmbH, 67661 Kaiserslautern (DE)
(72) Erfinder: Bergmann, Thorald, Dr., 82418 Murnau (DE); Knappe, Ralf, Dr., 67661 Kaiserslautern (DE)
(74) Vertreter: Graf Lambsdorff, Matthias

(56) Entgegenhaltungen:
- WO-A-98/07235
- FR-A- 1 490 953
- US-A- 3 703 661
- US-A- 5 361 275
- US-A- 5 548 234
- MATSUSHIMA I ET AL: "SINGLE PULSE SWITCHOUT SYSTEM FOR A PASSIVELY MODE-LOCKED Q-SWITCHED ND:YAG LASER" REVIEW OF SCIENTIFIC INSTRUMENTS, AMERICAN INSTITUTE OF PHYSICS. NEW YORK, US, Bd. 52, Nr. 12, 1. Dezember 1981 (1981-12-01), Seiten 1860-1864, XP000711244 ISSN: 0034-6748
- WEGNER P J ET AL: "HIGH-POWER NARROW-BAND PULSES WITH WAVELENGTHS TUNABLE ABOUT 1.053 MUM FROM A SYNCHRONOUSLY PUMPED OPTICAL PARAMETRIC OSCILLATOR" APPLIED OPTICS, OPTICAL SOCIETY OF AMERICA,WASHINGTON, US, Bd. 35, Nr. 6, 20. Februar 1996 (1996-02-20), Seiten 890-902, XP000559713 ISSN: 0003-6935

## Beschreibung

Die Erfindung betrifft einen Treiber oder eine elektrische Ansteuerung für eine Pockelszelle und Verwendungen einer derartig angesteuerten Pockelszelle in einem Lasersystem und für mit dem Lasersystem durchzuführende Anwendungen.

Eine Pockelszelle besteht im allgemeinen aus einem doppelbrechenden Kristall, welcher in geeigneter Weise zu einem einfallenden monochromatischen und polarisierten Lichtstrahl ausgerichtet ist und in Verbindung mit einer an ihn angelegten elektrischen Spannung in Größenordnung einiger 100V bis einiger Kilovolt und weiteren optischen Elementen wie z.B. Polarisator oder Spiegel, das Licht in Abhängigkeit von der elektrischen Spannung
(a) an- oder abschalten oder
(b) auf zwei verschiedenen Pfaden durch ein optisches System lenken kann.

Die Spannung, welche erforderlich ist, um die jeweils zwei genannten Zustände zu erreichen, ist eine Funktion der Kristallparameter und der verwendeten Wellenlänge des zu schaltenden Lichts. Es gibt Anwendungen von Pockelszellen, bei welchen diese schnell an- und abgeschaltet werden müssen, wobei beide Übergangszeiten im Bereich von wenigen Nanosekunden liegen müssen. Bei manchen Anwendungen muss nur eine dieser Übergangszeiten kurz sein, entweder das Anschalten oder das Abschalten, wobei die jeweils andere Übergangszeit durchaus im Bereich von Mikrosekunden liegen darf. Die Erfindung betrifft den Aufbau und die Anwendung einer Vorrichtung, bei welcher beide Übergangszeiten schnell sein müssen.

Diese Pockelszelle, kombiniert mit einer geeigneten schaltbaren Hochspannungsversorgung kann beispielsweise verwendet werden, um kurze Laserpulse mit einer Dauer von wenigen Nanosekunden (ns) oder ultrakurze Laserpulse mit Pikosekunden (ps)- oder Femtosekunden (fs)-dauer optisch zu schalten, d.h. die Intensität oder die Strahlrichtung der Laserpulse zu ändern. Ultrakurze Laserpulse werden bekanntermaßen durch das Verfahren der Modenkopplung erzeugt. Daher haben Laserstrahlquellen für ultrakurze Pulse prinzipbedingt immer sehr hohe Wiederholraten (größer als 10 Megahertz (MHz), typ. 70-200 MHz für Festkörperlaser) und niedrige Pulsenergien (im Nanojoule-Bereich, typ. 0,1-50 nJ). Werden einzelne Pulse oder Pulsgruppen von ps- oder fs-Laserpulsen benötigt, so wird häufig eine Pockelszelle verwendet, um diese Pulse zu selektieren. In diesem Fall muss zunächst zwischen zwei Pulsen, welche die Laserstrahlquelle typischerweise in einem zeitlichen Abstand von 6 bis 15 Nanosekunden aussendet, die Spannung vollständig angeschaltet werden, um nach Durchlassen eines einzigen Laserpulses 6 bis 15 Nanosekunden später vollständig wieder abgeschaltet zu werden.

Oft werden ultrakurze Laserpulse mit erheblich höherer Energie benötigt (z.B. 1000- bis 100.000-fach), als sie von Laserstrahlquellen mit Modenkopplung direkt erzeugt werden können. Typische Anwendungen für solche Laserpulse sind beispielsweise die nichtlineare Optik oder die Materialbearbeitung mit ultrakurzen Pulsen. In einem solchen Fall werden die selektierten Pulse in einen optischen Verstärker eingekoppelt, und durchlaufen diesen so oft, bis die benötigte Energie erreicht ist. Der optische Verstärker kann in einer linearen oder einer regenerativen Ausführung vorliegen.

Ein regenerativer optischer Verstärker besitzt bekanntlich einen Resonator, in dem sich ein verstärkendes Medium befindet. Die selektierten Laserpulse werden mit Hilfe einer weiteren Pockelszelle als optischem Schalter in den Resonator eingekoppelt, über eine Vielzahl von Umläufen verstärkt und dann wieder ausgekoppelt. Hierbei ist es wesentlich, dass diese Schaltprozesse innerhalb einer Umlaufzeit im Resonator des regenerativen Verstärkers erfolgen. Es ist also erforderlich, mit einer kurzen Schaltzeit in der Größenordnung von einigen Nanosekunden die an der Pockelszelle anliegende Spannung anzuschalten, so dass der einfallende Laserpuls im Resonator umläuft und verstärkt wird. Ebenso ist es erforderlich, mit der gleichen Geschwindigkeit die an der Pockelszelle anliegende Spannung abzuschalten, so dass der verstärkte Laserpuls den Resonator verlassen kann.

Die o.g. Verfahren werden wesentlich durch die derzeit verfügbaren Ansteuerungen für Pockelszellen eingeschränkt und zwar hinsichtlich zu langer Schaltzeiten, zu niedriger Schaltraten und zu geringem Kontrast. Die Schaltzeiten von mehreren ns beschränken die Verwendung modengekoppelter Laserstrahlquellen auf Wiederholraten von < 100 MHz und erfordern deshalb regenerative Verstärker mit langen Resonatoren, die Umlaufzeiten > 10 ns haben. Typische Schaltraten von weniger als 20 kHz sind zu niedrig, um Laser mit Verstärkern, deren Schaltraten durch die Ansteuerung der Pockelszelle begrenzt ist, z.B. in der Materialbearbeitung wirtschaftlich einzusetzen.

Bei der Verwendung von linearen Verstärkern durchlaufen die selektierten Impulse aus dem Ultrakurzpulslaser das verstärkende Medium ohne einen weiteren Schalter. Da auf diese Weise weniger Durchgänge durch den Verstärker möglich sind werden Verstärker hauptsächlich für niedrigere Pulsenergie oder bei sehr hoher Verstärkung eingesetzt. Ein wesentlicher Nachteil entsteht dabei nach dem derzeitigen Stand der Technik durch den geringen Kontrast zwischen selektierten und nicht selektierten Laserpulsen, der bei den üblichen Pockelszellen ansteuerungsbedingt nur ca. 300:1 beträgt. Die Resttransmission der nichtselektierten Laserpulse erzeugt eine Hintergrundstrahlung, deren Leistung meist höher ist, als die Leistung der selektierten Laserpulse. Betrachtet man beispielsweise eine Laserstrahlquelle mit einer Wiederholrate von 60 MHz und einer Pulsenergie von 30 nJ, von deren Strahlung Pulse mit einer Schaltrate von 20 kHz selektiert werden, so beträgt die mittlere Leistung der selektierten Impulse P = 20 kHz x 30 nJ = 0,6 mW. Zwischen den selektierten Laserpulsen sind jedoch jeweils 3000 Pulse, die bei dem o.g. Kontrast nur jeweils 300 mal schwächer sind. Die mittlere Leistung dieser Hintergrundstrahlung ist damit zehnfach höher und beträgt 6 mW. Ein linearer Verstärker, in den diese selektierten Impulse eingekoppelt werden, wird von seiner gespeicherten Energie also 91% an die Hintergrundstrahlung und nur 9% an die selektierten Laserpulse abgeben. Deshalb können in hochverstärkenden Lasersystemen nach dem heutigen Stand der Technik keine Pockelszellen zur Pulsselektion eingesetzt werden, sondern nur Pulsselektoren mit höherem Kontrast, wie z.B. Akusto-Optische Modulatoren (AOM). Diese Modulatoren haben jedoch andere gravierende Nachteile, wie z.B. eine geringe Transmission und niedrigere Zerstörschwellen.

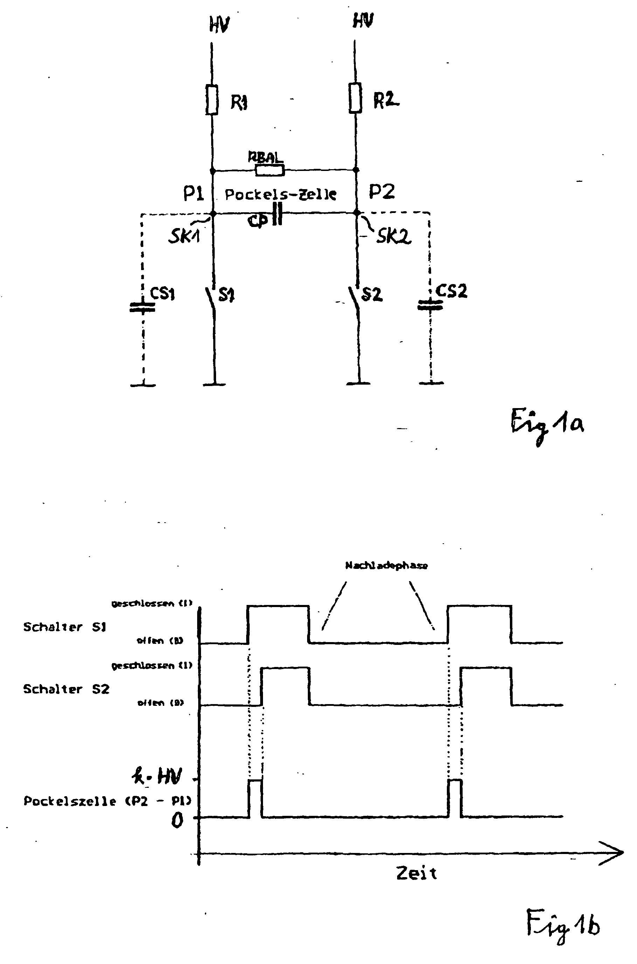

Pockelszellentreiber nach dem Stand der Technik sind aufgebaut wie beispielsweise in Fig. 1a gezeigt. Die Anordnung soll im folgenden H-Konfiguration genannt werden. Diese bekannte H-Konfiguration weist zwei Schaltungsknoten SK1 und SK2 auf, die an die elektrischen Anschlüsse der Pockelszelle anzuschließen sind. Die Schaltungsknoten SK1 und SK2 sind Ausgangspunkt von vier Leitungen, die den vier Schenkeln des Buchstaben-H bilden. Der erste Schaltungsknoten SK1 ist durch eine erste Leitung mit einem (Hoch-)Spannungsanschluss HV und durch eine zweite Leitung über einen ersten Schalter S1 mit Masse verbunden ist, während der zweite Schaltungsknoten SK2 durch eine dritte Leitung mit einem Spannungsanschluss HV und durch eine vierte Leitung über einen zweiten Schalter S2 mit Masse verbunden ist. Die in den gestrichelt gezeichneten Leitungen angeordneten, mit Masse verbundenen Kondensatoren CS1 und CS2 bezeichnen jeweils parasitäre Kapazitäten der Schalter S1 und S2. Mit CP ist die Kapazität der Pockelszelle und mit P1 und P2 sind die Potentiale an den Schaltungsknoten SK1 und SK2 bezeichnet.

Die durch S1 und S2 dargestellten Schalter sind Hochspannungsschalter. Hochspannungsschalter können Spannungen bis zu einigen Kilovolt oder einigen 10 Kilovolt schalten. Die Schaltzeiten von gebräuchlichen Transistor-Hochspannungsschaltern liegen im Bereich weniger Nanosekunden und lassen sich beispielsweise durch TTL-Signale von wenigen Volt ansteuern. Der innere Aufbau dieser Hochspannungsschalter ist bekannte Technik, beispielsweise in Patentschrift DE 3630775 C2 beschrieben. Ebenso ist die Erzeugung der Niederspannungs-Steuersignale-bekannte Technik, weshalb hier nicht näher darauf eingegangen werden soll.

Die Arbeitsweise dieser bekannten Schaltung ist in Fig. 1b gezeigt. Zunächst sind beide Schalter S1 uns S2 offen. Auf diese Weise ist die Pockelszelle spannungslos. Dann wird S1 geschlossen. Dadurch liegt an der Pockelszelle die Spannung an. Wenn man anschließend Schalter S2 schließt, wird die Pockelszelle wieder entladen. Nach einer durch die Anwendung vorgegebenen Wartezeit werden beide Schalter gleichzeitig oder kurz nacheinander geöffnet, womit beide Anschlüsse der Pockelszelle mit einer durch R1 und CS1 bzw. durch R2 und CS2 vorgegebenen Zeitkonstante wieder auf den Wert der anliegenden Hochspannung gezogen werden. In dem Zeitabfolgediagramm von Fig.1b wird dies als Nachladephase bezeichnet. Der Widerstand RBAL dient zur Verbesserung der Pulsform während der Zeit, zu welcher der Schalter S1 geschlossen, und der Schalter S2 offen ist. Das Zeitabfolge-Diagramm zeigt die zeitliche Abfolge der Schalterzustände und die daraus resultierende, an der Pockelszelle anliegende Spannung.

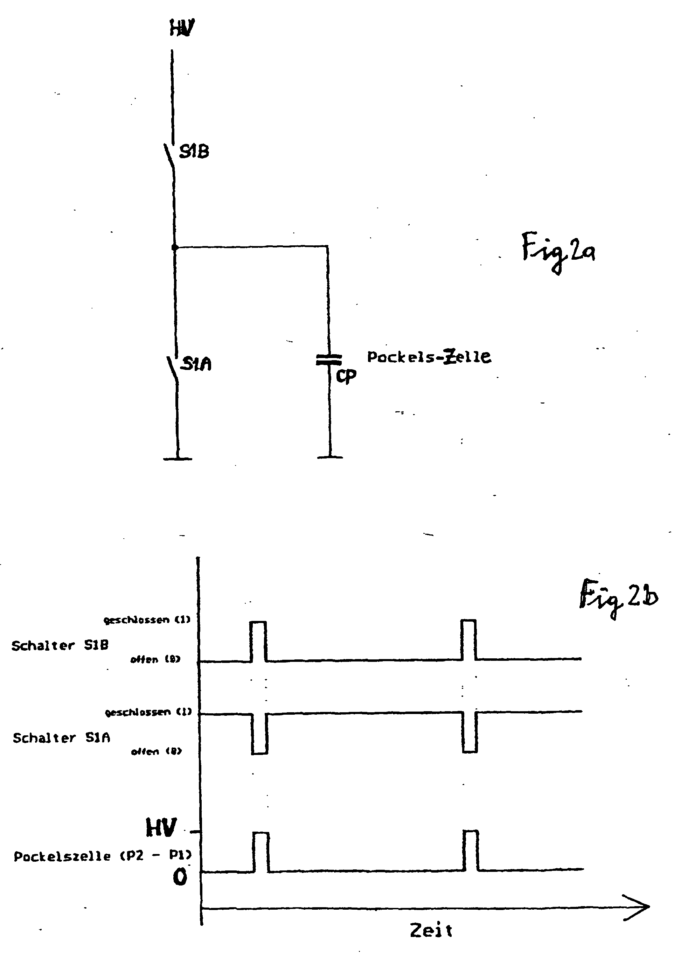

Eine weitere Variante nach dem Stand der Technik ist in Fig. 2 gezeigt. Dies ist ein einfacher Push-Pull-Schalter, wobei jeweils ein Schalter geschlossen, ein Schalter offen ist. Wenn Schalter S1A geschlossen und Schalter S1B offen ist, so ist die Pockelszelle spannungslos. Im umgekehrten Fall liegt die gesamte Hochspannung an der Pockelszelle an. Das Zeitabfolge-Diagramm zu dieser Variante zeigt das Schalten der beiden Schalter im gleichen Augenblick an. Denkbar ist auch, dass beispielsweise Schalter S1B wenige Nanosekunden vor dem Schließen von Schalter S1A-geöffnet wird. Die Spannung würde sich dann erst ändern, wenn Schalter S1A schließt.

Ein Pockelszellentreiber nach Fig. 1a hat die folgenden Nachteile :
(a) Wenn nur einer der Schalter S1 oder S2 geschlossen ist, so liegt nicht die volle Versorgungsspannung an der Pockelszelle an, sondern nur-der durch das Kapazitätsverhältnis k = CS2/CP gegebene Anteil. Man muss also eine höhere Versorgungsspannung HV anlegen, was einen entsprechend höheren Energieverbrauch pro Schaltvorgang bewirkt.
(b) Versucht man, das Kapazitätsverhältnis zu vergrößern, indem man Kondensatoren parallel zu den Schaltern anordnet, so erreicht man zwar eine höhere Spannung an der Pockelszelle pro angelegte Spannung, man vergeudet aber Energie zum Aufladen der parallel geschalteten Kondensatoren.
(c) Da die Zeit, während der ein Schalter geschlossen ist (Schließzeit) normalerweise fest vorgegeben ist, bestimmt dies auch die maximale Zeit, zu welcher man eine wohl definierte Spannung an die Pockelszelle anlegen kann.
(d) Umgekehrt bedeutet eine fest eingestellte Schließzeit der Schalter, dass je nach dem Zeitunterschied des Wieder-Öffnens an der Pockelszelle eine endliche Spannung während des Nachladevorgangs anliegt. Auch wenn beide Schalter gleichzeitig öffnen, so müssten die Zeitkonstanten der RC-Glieder R1/CS1 und R2/CS2 sehr präzise abgeglichen werden, um ein Auseinanderlaufen der Spannungen an beiden Seiten der Pockelszelle während der Nachladephase zu verhindern. Jedoch ist außer zu Zeiten, wenn die vollständige Betriebsspannung an der Pockelszelle anliegen soll, eine anliegende Restspannung an der Pockelszelle unerwünscht. Bei Verwendung von optischen Verstärkern mit hohem Verstärkungsgrad kann eine auf diese Weise hervorgerufene Resttransmission des Lichtschalters die Funktion des Lasersystems z.B. durch Hintergrundstrahlung beeinträchtigen.

Ein Pockelszellentreiber nach Fig. 2 vermeidet eine Restspannung während eines Nachladevorgangs, ebenso liegt im angeschalteten Zustand, d.h. wenn Schalter S1B geschlossen, S1A offen ist, die volle Versorgungsspannung an der Pockelszelle an, wodurch nicht unnütz Energie vergeudet wird. Jedoch kann normalerweise die Zeit zwischen dem Schließen und Öffnen eines Schalters nicht beliebig kurz gewählt werden, wodurch die Zeit, bei welcher Spannung an der Pockelszelle anliegt, nicht unterhalb eines bestimmten Minimalwertes gewählt werden kann. 100 Nanosekunden sind hier ein typischer Wert.

Eine weitere gattungsgemäße Pockelszellen-Ansteuerschaltung ist aus der Publikation "Single puls switchout system for a passively mode-locked Q-switched Nd: YAG laser" von I. Matsushima et al. in Review of Scientific Instruments, American Institute of Physics, New York, US, Bd. 52, Nr. 12, 1. Dezember 1981 (1981-12-01), Seiten 1860-1864, bekannt. In der Fig. 2 dieser Publikation ist ein Blockdiagramm der Pockelszellen-Ansteuerschaltung dargestellt, bei welcher ein erster Schaltungsknoten mit einem ersten Anschluss der Pockelszelle verbunden ist und ein zweiter Schaltungsknoten mit einem zweiten Anschluss der Pockelszelle verbunden ist, wobei der erste Schaltungsknoten über einen Widerstand mit einem Hochspannungs-Potentialanschluss und über einen ersten Schalter mit einem Massepotentialanschluss verbunden ist und der zweite Schaltungsknoten ebenfalls über einen Widerstand mit dem Hochspannungs-Potentialanschluss und über einen zweiten Schalter mit dem Massepotentialanschluss verbunden ist.

Diese Veröffentlichung offenbart alle Merkmale des Oberbegriffs der unabhängigen Ansprüche.

Der Erfindung liegt dementsprechend die Aufgabe zugrunde, einen Pockelszellentreiber anzugeben, welcher hohe Wiederholraten bei beliebigem Taktverhältnis und einwandfrei eingehaltenen Schaltzuständen gewährleistet. Insbesondere ist es Aufgabe der vorliegenden Erfindung, eine Vorrichtung zur Ansteuerung von Pockelszellen anzugeben, die eine Selektion von Laserimpulsen mit kurzen Schaltzeiten, hoher Schaltrate und hohem Kontrast zwischen selektierten und nicht selektierten Laserpulsen gewährleistet. Es ist ferner Aufgabe der Erfindung, Verwendungen dieser Pockelszellen für Lasersysteme, die kurze und ultrakurze Laserpulse mit hoher Energie und minimaler Hintergrundstrahlung erzeugen, sowie mögliche Anwendungen dieser Lasersysteme anzugeben.

Diese Aufgaben werden durch die Merkmale der unabhängigen Patentansprüche gelöst.

Geht man von der bekannten und oben beschriebenen H-Konfiguration eines Pockelszellentreibers aus, in der zwei Nachladewiderstände enthalten sind, so werden nun erfindungsgemäß einer oder beide Nachladewiderstände durch parallel geschaltete Schalter ergänzt oder durch diese Schalter vollständig ersetzt.

Ohne Bezugnahme auf die bekannte H-Konfiguration lässt sich die erfindungsgemäße Pockelszellen-Ansteuerschaltung, nachfolgend auch Pockelszellentreiber oder Treiber genannt, in ihrer allgemeinsten Form wie folgt beschreiben. Der Treiber weist einen ersten Schaltungsknoten auf, der mit einem ersten Anschluss der Pockelszelle zu verbinden ist, und einen zweiten Schaltungsknoten, der mit einem zweiten Anschluss der Pockelszelle zu verbinden ist. Der erste Schaltungsknoten ist durch eine erste Leitung mit einem ersten Potential und durch eine zweite Leitung über einen ersten (Hochspannungs-)Schalter mit einem zweiten Potential verbunden. Der zweite Schaltungsknoten ist durch eine dritte Leitung mit dem ersten Potential und durch eine vierte Leitung über einen zweiten (Hochspannungs-)Schalter mit dem zweiten Potential verbunden. In einer derartigen Treiberschaltung ist nunmehr noch mindestens ein weiterer (Hochspannungs-)Schalter enthalten, über den einer der beiden Schaltungsknoten mit dem ersten Potential verbunden ist.

Dabei kann das erste Potential durch einen Pol einer Spannungsquelle oder Masse und das zweite Potential ebenso durch Masse oder durch den anderen Pol der Spannungsquelle gegeben sein.

Für die Anordnung eines oder zweier weiterer Schalter gibt es verschiedene Möglichkeiten.

So kann die bekannte H-Konfiguration im wesentlichen beibehalten werden und es können in der den ersten Schaltungsknoten mit dem ersten Potential verbindenden ersten Leitung und der den zweiten Schaltungsknoten mit dem ersten Potential verbindenden dritten Leitung Nachladewiderstände angeordnet werden. Der weitere Schalter kann dann zu einem der Nachladewiderstände parallelgeschaltet und in einer fünften Leitung zwischen einem Schaltungsknoten und dem ersten Potential angeordnet werden.

In Erweiterung der vorstehend beschriebenen Ausführungsform kann auch zu dem zweiten Nachladewiderstand ein weiterer Schalter parallelgeschaltet und in einer sechsten Leitung zwischen dem anderen Schaltungsknoten und dem ersten Potential angeordnet werden.

Anstelle der Parallelschaltung zu einem oder beiden der Nachladewiderstände können einer oder beide Nachladewiderstände auch durch die Schalter ersetzt werden.

Durch den erfindungsgemäßen Pockelszellen-Treiber wird das Problem der Restspannung an der Pockelszelle vermieden und es können höhere Schaltraten im Bereich von 100-200 kHz erzielt werden, während durch konventionelle Treiber lediglich maximal 50 kHz erzielbar sind.

Durch die erfindungsgemäßen Treiber angesteuerte Pockelszellen können in vorteilhafter Weise in Lasersystemen eingesetzt werden. Zum einen können die erfindungsgemäß angesteuerten Pockelszellen innerhalb des Laserresonators als Güteschalter eingesetzt werden. Des Weiteren können sie außerhalb des Laserresonators zur Impulsselektion verwendet werden. In dieser Eigenschaft können sie beispielsweise zwischen der Laserstrahlquelle und einem optischen Verstärker eingesetzt werden. Sie können jedoch auch innerhalb des optischen Verstärkers eingesetzt werden (regenerativer optischer Verstärker). Die vorgenannten Anwendungen können auch kumulativ innerhalb eines Lasersystems eingesetzt werden, so dass das Lasersystem eine Mehrzahl von erfindungsgemäß angesteuerten Pockelszellen enthält.

Eine weiterführende Anwendung derartiger Lasersysteme ist die Erzeugung bestimmter gewünschter Impulsfolgen mit oder ohne nachgeschalteten Verstärker, um damit bestimmte Verfahren im Bereich der Materialbearbeitung oder der Anregungs-/Abfrage-Experimente (pump-probe) zu ermöglichen oder unter vereinfachtem Aufwand durchzuführen.

Im folgenden sind Ausführungsbeispiele für einen erfindungsgemäßen Treiber und ein Lasersystem in den Zeichnungsfiguren dargestellt. Es zeigen :
Fig.1a,b eine Treiberschaltung nach dem Stand der Technik (a) und Schalterstellungen und Potentialverläufe im Betriebszustand (b);
Fig.2 eine weitere Treiberschaltung nach dem Stand der Technik ("Push-Pull") (a) und Schalterstellungen und Potentialverläufe im Betriebszustand (b);
Fig.3a,b eine erste Ausführungsform eines erfindungsgemäßen Treibers (a) und Schalterstellungen und Potentialverläufe im Betriebszustand (b);
Fig.4 eine zweite Ausführungsform eines erfindungsgemäßen Treibers;
Fig.5a,b zwei verschiedene Betriebsmodi A und B der in Fig.4 gezeigten Ausführungsform;
Fig.6 eine Ausführungsform für ein Lasersystem umfassend eine LaserstrahIquelle und eine von einem erfindungsgemäßen Treiber angesteuerte Pockelszelle.

In der ersten Ausführungsform eines erfindungsgemäßen Treibers gemäss der Fig.3a wird die bekannte H-Konfiguration insoweit abgeändert, als dass einem der Nachladewiderstände, nämlich dem Nachladewiderstand R2, ein Hochleistungsschalter S2B parallelgeschaltet wird. Der Hochleistungsschalter S2B weist eine parasitäre Kapazität CS2B auf, die in eine gestrichelten Leitung eingezeichnet ist.

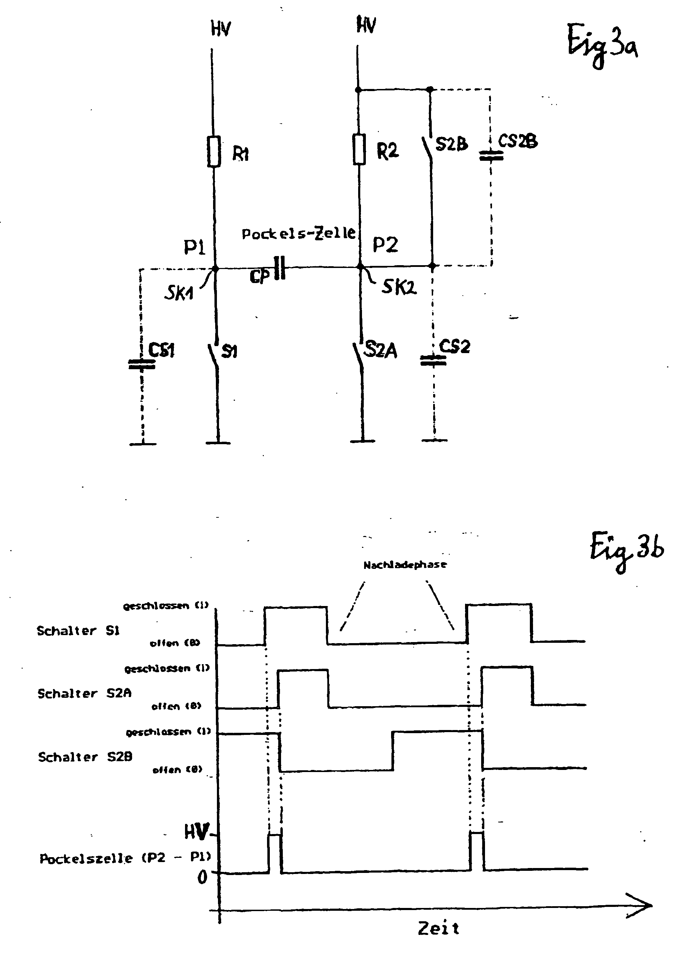

Die Betriebsweise des Treibers der Fig.3a ist in der Fig.3b dargestellt. Der Schalter S2B muss vor dem Schließen des Schalters S1 geschlossen sein. Schließt man nun den Schalter S1, so liegt die volle Versorgungsspannung an der Pockelszelle an. Zeitgleich mit dem Schließen des Schalters S2A, wodurch das Abschalten der Pockelszelle bewirkt wird, wird der Schalter S2B wieder geöffnet, um dann während der Nachladephase wieder geschlossen zu werden.

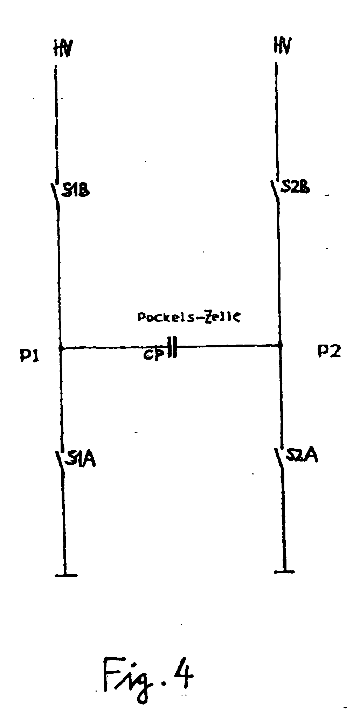

In einer weiteren, in der Fig.4 dargestellten Ausführungsform werden beide in der H-Konfiguration vorgesehenen Nachladewiderstände durch die Schalter S1B und S2B ersetzt. Die Schaltungsknoten SK1 und SK2 sind somit durch jeweils eine einzige Leitung (die erste und die dritte Leitung), in der jeweils ein Schalter (S1B, S2B) enthalten ist, mit dem Spannungsanschluss HV verbunden. Die Ausführungsform der Fig.4 ist somit gewissermaßen eine Verdoppelung des in Fig.2 gezeigten Push-Pull-Schalters.

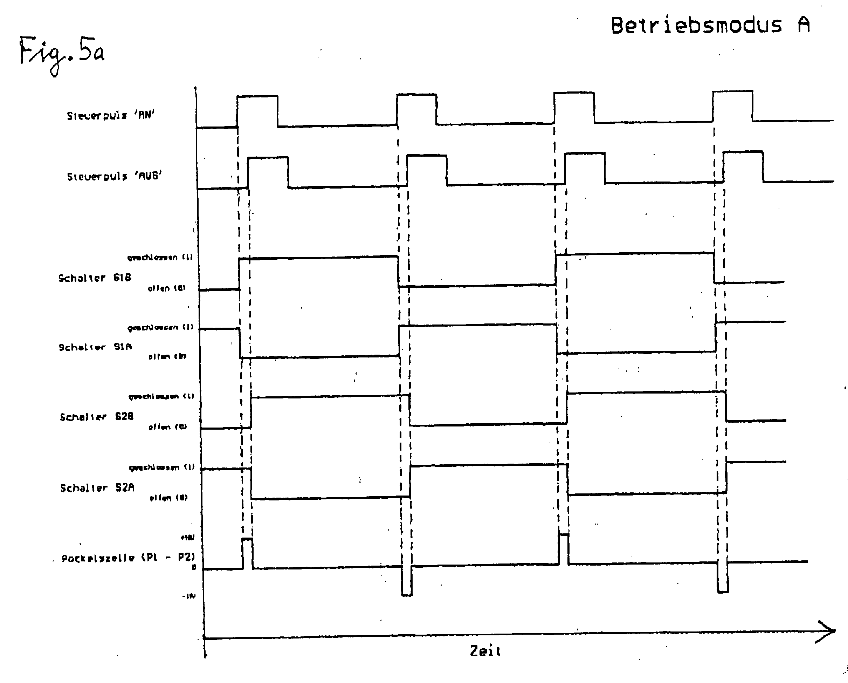

Erfindungsgemäß kann man alle vier Schalter durch vier einzelne Steuersignale ansteuern, beispielsweise mit Delay-Generatoren, welche volle Freiheit bei den Zeiten der einzelnen Schaltvorgänge lassen. Dies erlaubt z.B. alternierend Pulse mit unterschiedlichen Eigenschaften. Genauso ist es möglich, wie in Fig.5a,b vorgesehen, mit nur zwei Ansteuersignalen AN und AUS zu arbeiten, wenn eine Schaltung vorgesehen wird, welche jeden der zwei Ansteuerpulse abwechselnd einem von zwei Schaltern zuordnet. Die Fig.5a,b zeigen zwei Varianten, wie je zwei Steuerpulse Zustände der vier Schalter bewirken könnten, wobei jeweils die positiven Flanken der Steuerpulse benutzt werden, um entsprechende Änderungen des Schaltersystems zu bewirken. Die detaillierte Ausführung einer solchen Ansteuerung entspricht dem Stand der Technik und wird deshalb hier nicht besprochen.

Man erhält somit einen Pockelszellentreiber, welcher schlecht definierte Spannungszustände an der Pockelszelle während des Nachladevorgangs vermeidet. In den Figs.5a,b sind zwei verschiedene Betriebsarten A, B für einen Treiber der Fig.4 dargestellt. Dabei werden Steuerpulse AN und AUS verwendet, um die Schalter S1A, S1B, S2A und S2B an- und auszuschalten. Gemäss der Fig.5a (Betriebsmodus A) wird der Steuerpuls AN stets den Schaltern S1A und S1B zugeführt und bewirkt einen Wechsel von deren Schalterstellungen. Ebenso wird ein Steuerpuls AUS stets den Schaltern S2A und S2B zugeführt und bewirkt ebenso einen Wechsel von deren Schalterstellungen. Gemäss der Fig. 5b (Betriebsmodus B) werden die Steuerpulse AN und AUS jeweils im Wechsel einmal dem Schalterpaar S1A/S1B und das darauffolgende Mal dem Schalterpaar S2A/S2B zugeführt.

Wie man anhand Fig.5a,b leicht nachvollziehen kann, wird das bei einem Pockelszellentreibern gemäss Fig.1a vorhandene Problem der Restspannung an der Pockelszelle (im ausgeschalteten Zustand) bei der Ausführungsform nach Fig.4 sicher-vermieden.

Bei beiden Betriebsarten erreicht man, wenn man eine der Zustandsfolgen von Betriebsmodus A oder Betriebsmodus B verwendet, eine doppelte Pulsfolgefrequenz an der Pockelszelle bei nur halber Taktrate der Hochspannungsschalterpaare S1A/S1B - und S2A/S2B. Im Normalfall wird man keinen Unterschied zwischen Betriebsmodus A und Betriebsmodus B feststellen können, da die Wirkung der Pockelszelle auf durchgehendes Licht nicht von der Polarität der angelegten Spannung abhängt. In den Zeitabfolge-Diagrammen wird immer das Öffnen eines Schalters exakt synchron zum Schließen des Gegenschalters gezeigt, z.B. S1A und S1B, es ist aber auch möglich, beispielsweise S1B einige Nanosekunden vor dem Schließen von S1A zu öffnen.

Die Verwendung der erfindungsgemäßen Vorrichtung zur Ansteuerung der Pockelszelle in einem Lasersystem ermöglicht neue Konfigurationen von Ultrakurzpulslasern, welche nach dem derzeitigen Stand der Technik nicht oder nur unzureichend funktionieren, beispielsweise weil ihre Funktion durch Hintergrundstrahlung beeinträchtigt wird.

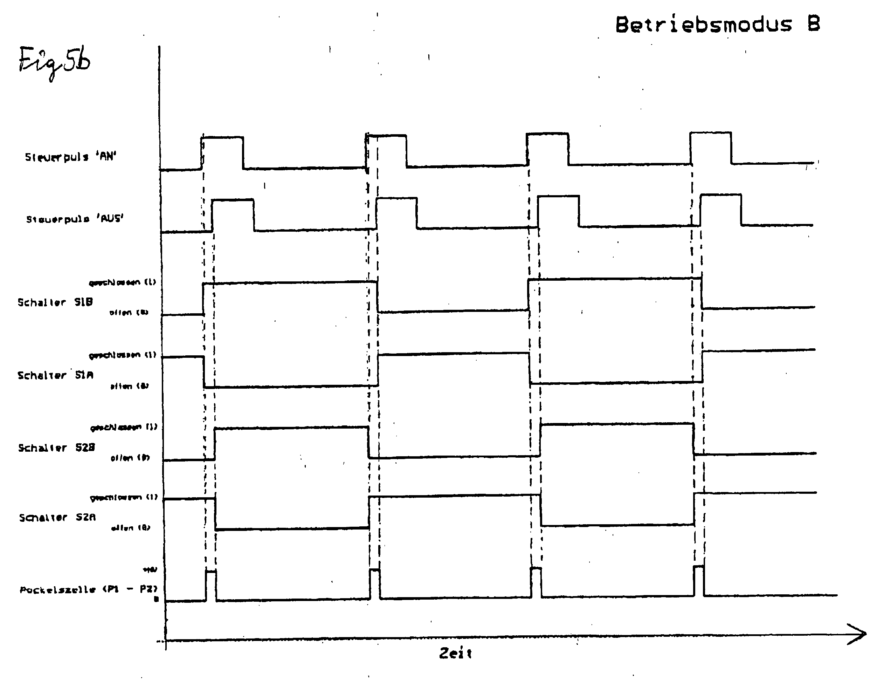

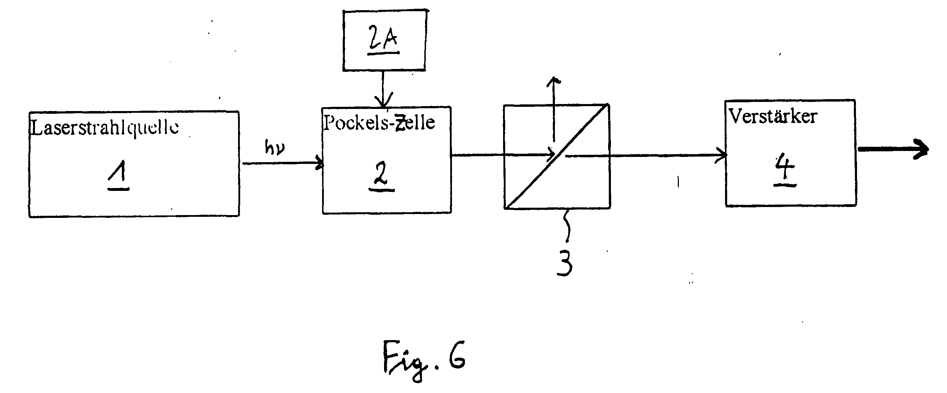

Eine erfindungsgemäß angesteuerte Pockelszelle kann, wie in Fig. 6 dargestellt, zur Impulsselektion zwischen einer Laserstrahlquelle 1 und einer Vorrichtung mit hoher Verstärkung eingesetzt werden und gewährleistet eine effiziente Energieabgabe an die selektierten Impulse. Wird beispielsweise eine Laserstrahlquelle mit einer Wiederholrate von 60 MHz verwendet, so lassen sich erfindungsgemäß durch eine von einem Treiber 2A angesteuerte Pockelszelle 2 Pulse mit einer Schaltrate von 100-200 kHz und einem Kontrast von 3000:1 selektieren. Die mittlere Leistung der selektierten Pulse ist damit 10-fach höher als die der verbleibenden Hintergrundstrahlung. Die Verstärkung der selektierten Pulse verbessert sich um einen Faktor 100, verglichen mit Vorrichtungen, die Pockelszellen mit Ansteuerungen nach dem derzeitigen Stand der Technik verwenden. Zwischen der Pockelszelle 2 und dem optischen Verstärker 4 ist ein polarisationsabhängiges optisches Element 3 vorgesehen, welches so steht, dass es eine Polarisationsrichtung zum Verstärker 4 passieren lässt, während die andere, senkrecht dazu stehende Polarisationsrichtung reflektiert wird.

Bei der Ausführungsform der Fig.6 ist die Pockelszelle außerhalb des Laserresonators angeordnet. Eine erfindungsgemäß angesteuerte Pockelszelle kann jedoch aufgrund des hohen Kontrastes und der schnellen Schaltzeiten zur Impulsselektion auch direkt im Resonator der Laserstrahlquelle als Güteschalter verwendet werden. In Kombination mit einem polarisierenden Element wird durch Veränderung der Hochspannung an der Pockelszelle die Güte des Resonators innerhalb einer Umlaufzeit stark verändert. Die Pulse laufen dann bei ausgeschalteter Pockelszelle mehrfach im Resonator zwischen vollreflektierenden Endspiegeln um und werden dann in an sich bekannter Weise bei angeschalteter Pockelszelle durch ein polarisationsabhängiges optisches Element ausgekoppelt. Auf diese Weise können Pulse mit höherer Energie selektiert werden, als das bisher möglich ist.

Als weitere Variante kann die erfindungsgemäß angesteuerte Pockelszelle innerhalb des Resonators des optischen Verstärkers 4 angeordnet werden. Auch hier können Pulse nach mehrmaligem Umlauf im Resonator geeignet verstärkt und dann durch Anschalten der Pockelszelle mittels eines pölarisationsabhängigen optischen Elementes ausgekoppelt werden.

Die in der Fig.6 dargestellte Pockelszelle 2 kann somit zugunsten der im Verstärker enthaltenen Pockelszelle auch weggelassen werden. Es sind jedoch auch beliebige Kombinationen der vorgenannten Anwendungsfälle von erfindungsgemäß angesteuerten Pockelszellen innerhalb des Lasersystems der Fig.6 vorstellbar.

Eine erfindungsgemäß angesteuerte Pockelszelle kann zur Selektion von zwei schnell aufeinanderfolgenden Laserpulsen mit hoher Schaltrate (z.B. 100 kHz) verwendet werden. Der zeitliche Abstand Δt dieser Doppelpulse kann variabel zwischen einer Mindestschaltzeit von ca. 30 ns und der Zeit bis zum nächsten Schaltvorgang (in diesem Beispiel 10 µs) eingestellt werden. Der erste Puls kann zur Anregung eines elektronischen Zustands dienen, der zweite Puls zur Abfrage oder Modifizierung des Zustands. Der zweite Puls bewirkt ein Signal, beispielsweise die transmittierte oder reflektierte Lichtintensität des zweiten Pulses oder einen elektrischen Strom, und die Signalstärke wird in Abhängigkeit von der zeitlichen Verzögerung zwischen Anregungs- und Abfragepuls gemessen. Solche den Fachleuten als sog. Pump-Probe- (Anregung-Abfrage-) Anordnungen bekannten Verfahren können nach dem bisherigen Stand der Technik nur mit erheblich größerem apparativen Aufwand realisiert werden.

Ein erfindungsgemäßes Lasersystem, das Doppelpulse mit hoher Schaltrate, einstellbarem Abstand der beiden Pulse zueinander und einstellbarer Anzahl der selektierten Pulse pro Schaltvorgang erzeugt, kann in vorteilhafter Weise bei der Materialbearbeitung dahingehend ausgenutzt werden, um durch einen oder mehrere erste Laserpulse die Eigenschaften einer Materialoberfläche zu modifizieren und nach einer definierten Zeit diese Oberfläche durch einen oder mehrere Folgepulse zu bearbeiten. Beispielsweise kann durch einen ersten Einschalt-Puls an der Pockelszelle ein einziger Laserpuls ausgekoppelt werden, welcher eine Plasmawolke über einem zu bearbeitendem Werkstück erzeugt, und ein zweiter, längerer Einschalt-Puls an der Pockelszelle kann einen ganzen Zug von Laserpulsen durch die Plasmawolke passieren lassen.

## Patentansprüche

1. Pockelszellen-Ansteuerschaltung, mit
- einem ersten Schaltungsknoten (SK1), der mit einem ersten Anschluss einer Pockelszelle (CP) zu verbinden ist, und einem zweiten Schaltungsknoten (SK2), der mit einem zweiten Anschluss der Pockelszelle (CP) zu verbinden ist, wobei
- der erste Schaltungsknoten (SK1) über einen ersten Schalter (S1) mit einem ersten Potential verbunden ist, und
- der zweite Schaltungsknoten (SK2) über einen zweiten Schalter (S2) mit dem ersten Potential verbunden ist,
**dadurch gekennzeichnet, dass**
- beide Schaltungsknoten (SK1, SK2) über jeweils einen Nachladewiderstand (R1, R2) mit einem zweiten Potential (HV) verbunden sind, und
- einer (SK2) oder beide Schaltungsknoten (SK1, SK2) über jeweils einen weiteren Schalter (S2B) mit dem zweiten Potential (HV) verbunden ist/sind.

2. Pockelszellen-Ansteuerschaltung nach dem Oberbegriff des Anspruchs 1,
**dadurch gekennzeichnet, dass**
- einer der beiden Schaltungsknoten (SK1, SK2) über einen Nachladewiderstand mit einem zweiten Potential (HV) verbunden ist, während der andere der beiden Schaltungsknoten (SK1, SK2) über einen weiteren Schalter mit dem zweiten Potential (HV) verbunden ist.

3. Pockelszellen-Ansteuerschaltung nach dem Oberbegriff des Anspruchs 1,
**dadurch gekennzeichnet, dass**
- beide Schaltungsknoten (SK1, SK2) über jeweils einen Schalter (S1B, S2B) mit einem zweiten Potential (HV) verbunden sind.

4. Pockelszellen-Ansteuerschaltung nach einem der vorherigen Ansprüche,
**dadurch gekennzeichnet, dass**
- die drei oder vier Schalter (S1A, S1B, S2A, S2B) durch einzelne, ihnen zugeordnete Steuerpulse ansteuerbar sind.

5. Pockelszellen-Ansteuerschaltung nach einem der Ansprüche 1 bis 4,
**dadurch gekennzeichnet, dass**
- die drei oder vier Schalter (S1A, S1B, S2A, S2B) durch nur zwei Steuerpulse (AN, AUS) ansteuerbar sind, wobei der eine Steuerpuls (AN) ein Anlegen der Spannung an der Pockelszelle bewirkt, der zweite Steuerpuls (AUS) die Spannung an der Pockelszelle wieder abschaltet.

6. Anordnung enthaltend eine Pockelszelle und eine mit dieser verbundene Pockelszellen-Ansteuerschaltung nach einem der vorherigen Ansprüche.

7. Verwendung mindestens einer Anordnung nach Anspruch 6 zum optischen Schalten von Laserpulsen.

8. Verwendung nach Anspruch 7, wobei das Lasersystem eine Laserstrahlquelle (1) mit einem Laserresonator enthält und die Pockelszelle (2) im Strahlengang der Laserstrahlung innerhalb und/oder außerhalb des Laserresonators angeordnet ist.

9. Verwendung nach Anspruch 7 oder 8, wobei das Lasersystem eine Laserstrahlquelle (1) und einen optischen Verstärker (4) enthält.

10. Verwendung nach Anspruch 9, wobei die Anordnung nach Anspruch 6 in dem optischen Verstärker (4) enthalten ist.

11. Verwendung nach den Ansprüchen 8 und 9, wobei eine weitere Anordnung nach Anspruch 6 in dem optischen Verstärker (4) enthalten ist.

12. Verwendung nach einem der Ansprüche 7 bis 9 für ein optisches Anregungs-/Abfrage-Verfahren, bei welchem
- ein optischer Anregungspuls und ein zeitlich verzögerter optischer Abfragepuls auf ein Medium gerichtet werden, und
- ein durch den Abfragepuls bewirktes Signal in Abhängigkeit von der zeitlichen Verzögerung zwischen Anregungs- und Abfragepuls gemessen wird, wobei
- die Pulsfolge aus Anregungs- und Abfragepuls und die zeitliche Verzögerung zwischen diesen durch die Pockelszelle und ihren Treiber, insbesondere die Beaufschlagung der Schalter des Treibers, bestimmt werden.

13. Verwendung nach einem der Ansprüche 7 bis 9 für ein Materialbearbeitungsverfahren, bei welchem
- ein erster Laserpuls derart auf eine Materialoberfläche gerichtet wird, dass an der Oberfläche ein Plasma erzeugt wird, und
- mit einem vorgegebenen zeitlichen Abstand dazu eine Mehrzahl von Laserpulsen auf das Plasma gerichtet werden, wobei
- die Pulsfolge aus dem ersten Laserpuls und der Mehrzahl von Laserpulsen und der zeitliche Abstand zwischen diesen durch die Pockelszelle und ihren Treiber, insbesondere die Beaufschlagung der Schalter des Treibers, bestimmt werden.

## Claims

1. A Pockels cell driver circuit, comprising
- a first circuit node (SK1) to be connected with a first connector of the Pockels cell (CP) and a second circuit node (SK2) to be connected with a second connector of the Pockels cell (CP), wherein
- the first circuit node (SK1) is connected with a first potential via a first switch (S1), and
- the second circuit node (SK2) is connected with the first potential via a second switch (S2),
**characterized in that**
- both circuit nodes (SK1, SK2) are connected with a second potential (HV) via a recharging resistor (R1, R2), respectively, and
- one (SK2) or both circuit nodes (SK1, SK2) is/are connected with the second potential (HV) via a further switch (S2B), respectively.

2. A Pockels cell driver circuit according to the precharacterizing portion of claim 1,
**characterized in that**
- one of both circuit nodes (SK1, SK2) is connected with a second potential (HV) via a recharging resistor, while the other one of both circuit nodes (SK1, SK2) is connected with the second potential (HV) via a further switch.

3. A Pockels cell driver circuit according to the precharacterizing portion of claim 1,
**characterized in that**
- both circuit nodes (SK1, SK2) are connected with a second potential (HV) via a switch (S1B, S2B), respectively.

4. The Pockels cell driver circuit according to one of the previous claims,
**characterized in that**
- the three or four switches (S1A, S1B, S2A, S2B) are controllable by control pulses individually associated to them.

5. The Pockels cell driver circuit according to one of claims 1 to 4,
**characterized in that**
- the three or four switches (S1A, S1B, S2A, S2B) are controllable by only two control pulses (ON, OFF) wherein one control pulse (ON) effects applying the voltage to the Pockels cell and the second control pulse (OFF) removes the voltage from the Pockels cell.

6. An arrangement comprising a Pockels cell and a Pockels cell driver circuit according to one of the previous claims.

7. The use of an arrangement according to claim 6 for optical switching of laser pulses.

8. The use according to claim 7, wherein a laser system comprises a laser beam source (1) having a laser resonator and the Pockels cell (2) is arranged in the path of rays of the laser radiation internally and/or externally of the laser resonator.

9. The use according to claim 7 or 8, wherein the laser system comprises a laser beam source (1) and an optical amplifier (4) .

10. The use according to claim 9, wherein the arrangement according to claim 6 is contained within the optical amplifier (4).

11. The use according to claims 8 and 9, wherein a further arrangement according to claim 6 is contained within the optical amplifier (4).

12. The use according to one of claims 7 to 9 for an optical pump-/probe method, in which
- an optical excitation pulse and a delayed optical monitoring pulse are directed onto a medium, and
- a signal effected by the delayed monitoring pulse is measured as a function of delay between the two pulses, wherein
- the pulse sequence of excitation and monitoring pulses and the delay from one to another is determined by the Pockels cell and the driver circuit of the Pockels cell.

13. The use according to one of claims 7 to 9 for a material processing method, in which
- a first laser pulse is directed onto the material surface such that a plasma is generated at the surface, and
- after a predetermined time delay a number of laser pulses is directed onto the plasma, whereby
- the pulse sequence of the first laser pulse and the number of laser pulses and the time delay between these laser pulses are determined by the Pockels cell and the driver circuit of the Pockels cell, in particular by the acting on the switches of the driver.

## Revendications

1. Circuit de pilotage pour cellule de Pockels, comportant
- un premier noeud de circuit (SK1) à connecter à une première borne d'une cellule de Pockels (CP), et un second noeud de circuit (SK2) à connecter à une seconde borne de la cellule de Pockels (CP), dans lequel
- le premier noeud de circuit (SK1) est connecté à un premier potentiel via un premier interrupteur (S1), et
- le second noeud de circuit (SK2) est connecté au premier potentiel via un second interrupteur (S2),
**caractérisé en ce que**
- les deux noeuds de circuit (SK1, SK2) sont connectés à un second potentiel (HV) chacun via une résistance de recharge (R1, R2), et
- un noeud (SK2) ou les deux noeuds de circuit (SK1, SK2) est/sont connecté(s) au second potentiel (HV) chacun via un autre interrupteur (S2B).

2. Circuit de pilotage pour cellule de Pockels selon le préambule de la revendication 1,
**caractérisé en ce que**
- l'un des deux noeuds de circuit (SK1, SK2) est connecté à un second potentiel (HV) via une résistance de recharge, tandis que l'autre des deux noeuds de circuit (SK1, SK2) est connecté au second potentiel (HV) via un autre interrupteur.

3. Circuit de pilotage pour cellule de Pockels selon le préambule de la revendication 1,
**caractérisé en ce que**
- les deux noeuds de circuit (SK1, SK2) sont connectés au second potentiel (HV) chacun via un interrupteur (S1B, S2B).

4. Circuit de pilotage pour cellule de Pockels selon l'une des revendications précédentes,
**caractérisé en ce que**
- les trois ou quatre interrupteurs (S1A, S1B, S2A, S2B) sont pilotables par des impulsions de commande individuelles qui leur sont associées.

5. Circuit de pilotage pour cellule de Pockels selon l'une des revendications 1 à 4,
**caractérisé en ce que**
- les trois ou quatre interrupteurs (S1A, S1B, S2A, S2B) sont pilotables par seulement deux impulsions de commande (MARCHE, ARRET), l'une des impulsions de commande (MARCHE) provoquant l'application d'une tension à la cellule de Pockels et la seconde impulsion de commande (ARRET) coupant la tension de la cellule de Pockels.

6. Agencement comprenant une cellule de Pockels et un circuit de pilotage pour cellule de Pockels selon l'une des revendications précédentes, relié à celle-ci.

7. Utilisation d'au moins un agencement selon la revendication 6 pour la commutation optique d'impulsions de laser.

8. Utilisation selon la revendication 7, dans laquelle le système laser comprend une source de rayonnement laser (1) pourvu d'un résonateur laser, et la cellule de Pockels (2) est agencée dans la trajectoire des rayons du rayonnement laser à l'intérieur et/ou à l'extérieur du résonateur laser.

9. Utilisation selon la revendication 7 ou 8, dans laquelle le système laser comprend une source de rayonnement laser (1) et un amplificateur optique (4).

10. Utilisation selon la revendication 9, dans laquelle l'agencement selon la revendication 6 est contenu dans l'amplificateur optique (4).

11. Utilisation selon les revendications 8 et 9, dans laquelle un autre agencement selon la revendication 6 est contenu dans l'amplificateur optique (4).

12. Utilisation selon l'une des revendications 7 à 9 pour un procédé d'excitation/interrogation optique, dans lequel
- une impulsion d'excitation optique et une impulsion d'interrogation optique retardée dans le temps sont dirigées vers un milieu, et
- un signal provoqué par l'impulsion d'interrogation est mesuré en fonction du retard temporel entre l'impulsion d'excitation et l'impulsion d'interrogation, et
- la succession des impulsions d'excitation et d'interrogation et le retard temporel entre celles-ci sont déterminés par la cellule de Pockels et par son pilote, en particulier par la sollicitation des interrupteurs du pilote.

13. Utilisation selon l'une des revendications 7 à 9 pour un procédé de traitement de matériau dans lequel
- une première impulsion laser est dirigée vers une surface du matériau de telle sorte qu'un plasma est généré sur la surface, et
- à un intervalle temporel prédéterminé, une pluralité d'impulsions laser sont dirigées sur le plasma, et
- la succession de la première impulsion laser et de la pluralité d'impulsions laser et l'intervalle temporel entre celles-ci sont déterminés par la cellule de Pockels et par son pilote, en particulier par la sollicitation des interrupteurs du pilote.
